# FASCICULE DE BREVET EUROPEEN

(11) **EP 3 980 662 B1**
(45) Date de publication et mention de la délivrance du brevet: **13.08.2025**
(21) Numéro de dépôt: 20742318.7
(22) Date de dépôt: 05.06.2020
(51) Int. Cl.: F16D 65/18, B60T 13/74, F16H 25/24

(54) **ACTIONNEUR ELECTROMECANIQUE POUR FREIN DE VEHICULE A DUREE DE VIE AUGMENTEE**
ELEKTROMECHANISCHER AKTUATOR FÜR EINE FAHRZEUGBREMSE MIT ERHÖHTER LEBENSDAUER
ELECTROMECHANICAL ACTUATOR FOR A VEHICLE BRAKE WITH INCREASED SERVICE LIFE

(30) Priorité: 07.06.2019 FR 1906067
(43) Date de publication de la demande: 13.04.2022
(73) Titulaire: Hitachi Astemo France, 93700 Drancy (FR)
(72) Inventeur: LUU, Gérard, 93160 NOISY LE GRAND (FR); DUPAS, Christophe, 44210 PORNIC (FR); MOLINARO, Alberto, Yokohama-shi KANAGAWA-KEN, 224--0037 (JP); GUIGNON, Cédric, 94510 LA QUEUE EN BRIE (FR); AYACHE, Marc, 75002 PARIS (FR)
(74) Mandataire: Brevalex
(86) Numéro de dépôt international: PCT/FR2020/050961
(87) Numéro de publication internationale: WO 2020/245548

(56) Documents cités:
- WO-A2-2015/082205
- US-A1- 2017 321 773

## Description

### DOMAINE TECHNIQUE

L'invention se rapporte au domaine du freinage de véhicule automobile de type électromécanique, et plus précisément à un actionneur électromécanique pour frein de véhicule. L'invention se rapporte également à un frein à tambour, notamment pour une application de frein de parking, à actionneur électromécanique.

### ÉTAT DE LA TECHNIQUE ANTÉRIEURE

Dans un frein pour véhicule de type électromécanique, il est connu d'activer électriquement le déplacement sélectif d'un segment portant une garniture de friction. Le déplacement du segment est commandé par un actionneur électromécanique, entre une position de freinage dans laquelle la garniture de friction est en appui contre une surface tournante liée en rotation à la roue du véhicule équipé du frein, et une position de repos dans laquelle la garniture de friction s'étend à distance de la surface tournante.

Cet actionneur électromécanique comporte un moteur électrique, piloté par un calculateur régulant le courant électrique absorbé par le moteur, ce moteur entraînant en rotation une vis sans fin portant un écrou bloqué en rotation et libre de se translater le long de cette vis en emportant le déplacement du segment.

Entre chaque cycle de freinage/défreinage, il est souhaité connaître la position de l'écrou au repos le long de la vis pour assurer le bon fonctionnement du frein, sans pour autant conduire à ajouter un capteur de position et une chaîne associée de traitement des données recueillies.

A cet effet, il est connu de faire fonctionner le moteur, dans le régime inverse à celui prévu durant l'étape de freinage, jusqu'à ce que l'écrou soit en appui contre une butée prévue à l'extrémité distale de la vis par rapport à la surface tournante. L'écrou en appui contre cette butée marque une position de repos dite entièrement rétractée de l'écrou, et par conséquent du segment.

Lorsque cette position rétractée est atteinte, la résistance à l'avancement de l'écrou augmente brusquement induisant une montée en effort de l'écrou qui se serre contre la butée, se serrage se répercutant par un pic d'augmentation de l'intensité nominale du courant traversant le moteur. Le calculateur détecte alors une valeur d'intensité dépassant une valeur seuil prédéfinie, correspondant à l'indication selon laquelle l'écrou est entièrement rétracté et provoque alors l'arrêt de l'alimentation électrique du moteur.

En pratique, entre l'instant où l'écrou vient en butée et l'instant où l'arrêt de l'alimentation est effectif, une certaine période de temps s'écoule, correspondant au temps de réaction du calculateur. Pendant la durée de ce temps de réaction, le moteur continue d'entraîner en rotation la vis et le serrage de l'écrou contre la butée. Ces montées en effort répétées de l'écrou contre la butée le long de la vie en fonctionnement du frein, risquent alors d'endommager les composants de l'actionneur, et notamment d'induire un vieillissement prématuré du moteur.

Des actionneurs électromécaniques de l'art antérieur sont connus par WO 2015/082205 A2 et US 2017/321773 A1.

L'invention a pour but de proposer un actionneur électromécanique pour frein de véhicule permettant de connaître la position de l'écrou le long de la vis sans pour autant exposer ses composants à un endommagement.

### EXPOSÉ DE L'INVENTION

A cet effet, l'invention a pour objet un actionneur électromécanique pour frein de véhicule automobile comprenant un moteur électrique absorbant un courant d'intensité nominale, et un convertisseur de mouvement de type vis-écrou incluant :
- un élément menant parmi une vis d'axe s'étendant suivant une direction longitudinale et un écrou porté par la vis, la vis et l'écrou comprenant chacun un filetage pour coopérer ensemble, et
- un élément mené correspondant à l'autre parmi la vis et l'écrou, l'élément menant étant couplé en rotation avec le moteur électrique et fixe en translation suivant la direction longitudinale, et l'élément mené étant fixe en rotation et libre en translation suivant la direction longitudinale, cet élément mené se déplaçant suivant la direction longitudinale en réponse à une rotation de l'élément menant,
caractérisé en ce qu'il comporte au moins un moyen de variation de résistance à l'avancement de l'élément mené au niveau d'au moins une position prédéterminée le long du déplacement de l'élément mené suivant la direction longitudinale pour provoquer une modification d'intensité nominale du courant traversant le moteur lors du passage de l'élément mené sur la position prédéterminée.

Avec cette solution, la position de l'élément mené peut être connue en ce que son passage sur la position prédéterminée correspond à une variation d'intensité nominale du courant absorbé par le moteur électrique, sans conduire à un endommagement particulier des composants de l'actionneur et plus particulièrement du moteur électrique.

De préférence, la modification d'intensité nominale du courant traversant le moteur lors du passage de l'élément mené sur la position prédéterminée est une augmentation d'intensité.

Selon un mode de réalisation n'entrant pas dans le cadre de l'invention, le moyen de variation de résistance à l'avancement de l'élément mené est un organe de rappel élastique en compression s'étendant le long d'une portion de la vis.

Selon un mode de réalisation n'entrant pas dans le cadre de l'invention, l'organe de rappel élastique est un ressort, de préférence un ressort précontraint.

Selon l'invention, le moyen de variation de résistance à l'avancement de l'élément mené est une singularité formée sur la vis.

De préférence, la singularité est une portion de filetage de la vis qui est surdimensionnée.

L'invention a également pour objet un frein pour véhicule automobile comprenant au moins un segment de frein et un actionneur électromécanique ainsi défini, l'élément mené de l'actionneur électromécanique étant prévu pour accompagner dans son déplacement le segment entre une position de freinage dans laquelle le segment est en appui contre une surface tournante à freiner, et une position entièrement rétractée du segment.

De préférence, dans le frein ainsi défini, ledit moyen est disposé pour que l'élément mené rencontre la position prédéterminée avant d'atteindre sa position entièrement rétractée dans le sens de rétractation du segment.

De préférence dans le frein ainsi défini, l'actionneur électromécanique assure un freinage de stationnement et/ou de secours.

L'invention concerne également un procédé de suivi de la position de l'élément mené d'un actionneur électromécanique ainsi défini, ce procédé comprenant les étapes de :
- établir une valeur seuil d'intensité au regard de la variation d'intensité nominale induite par la résistance à l'avancement prédéfinie de l'élément mené quand il est sollicité par le moyen de variation l'avancement, cette valeur seuil étant définie pour être atteinte par l'intensité nominale au niveau de la portion prédéterminée ;
- prendre des mesures d'intensité nominale durant le déplacement de l'élément mené suivant la direction longitudinale et comparer ces mesures à la valeur seuil d'intensité.

L'invention concerne également un procédé ainsi défini, comprenant également les étapes de :
- arrêt de fourniture du courant au moteur électrique si l'intensité nominale qu'il absorbe atteint la valeur seuil, et
- évaluation de la position de l'élément mené à l'arrêt en considérant la rotation de l'élément menant entre l'instant où l'intensité nominale atteint le seuil d'intensité et l'instant où l'arrêt du moteur est effectif.

### BRÈVE DESCRIPTION DES DESSINS

- la figure 1 est une vue en perspective d'un frein à tambour selon l'invention.
- la figure 2 représente un actionneur électromécanique selon un mode de réalisation n'entrant pas dans le cadre de l'invention, comprenant un écrou se déplaçant longitudinalement et un ressort s'opposant à son déplacement, ainsi qu'un graphique associé à cette architecture qui simule une réponse en intensité nominale en fonction de l'avancement de l'écrou.
- la figure 3 représente un actionneur électromécanique selon l'invention, comprenant un écrou se déplaçant longitudinalement et une vis à filetage irrégulier s'opposant au déplacement de l'écrou, ainsi qu'un graphique associé à cette architecture qui simule une réponse en intensité nominale en fonction de l'avancement de l'écrou.
- la figure 4 représente un actionneur électromécanique selon un mode de réalisation n'entrant pas dans le cadre de l'invention, comprenant une vis se déplaçant longitudinalement et un ressort s'opposant à son déplacement.
- la figure 5 représente un actionneur électromécanique selon un mode de réalisation de l'invention, comprenant une vis se déplaçant longitudinalement et un filetage irrégulier s'opposant à son déplacement.

### EXPOSÉ DÉTAILLÉ DE MODES DE RÉALISATION PARTICULIERS

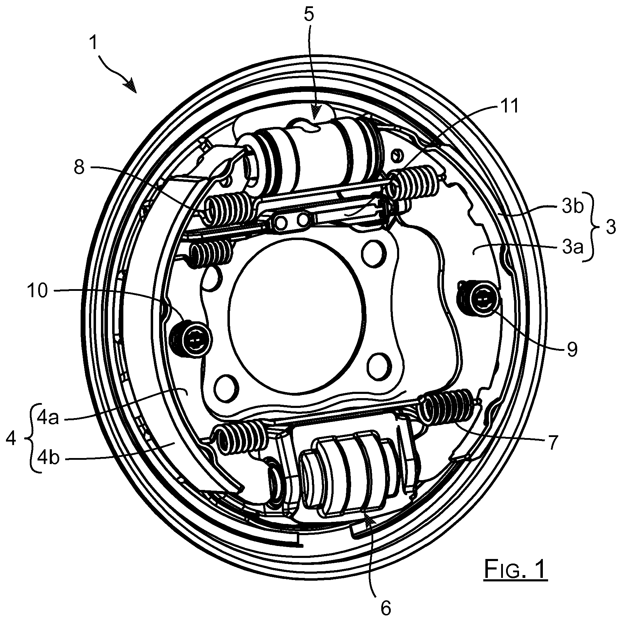

En référence à la figure 1, il est représenté un frein à tambour 1, comportant un plateau 2 de révolution équipé d'un premier et d'un second segments de frein 3 et 4 en arc de cercles et mobiles radialement pour pouvoir être pressés contre la face tournante d'un tambour à freiner, non représenté.

Les segments 3 et 4 comportent chacun une âme 3a, 4a en tôle plane en forme de portion de couronne circulaire qui porte une garniture de friction 3b, 4b, et sont montés diamétralement opposés avec leurs extrémités en appui à fois sur un cylindre de roue 5 hydraulique et sur un actionneur électromécanique 6 portés par le plateau 2. Ces segments 3 et 4 sont en outre rappelés l'un vers l'autre par deux ressorts de rappel 7 et 8, et plaqués contre le plateau 2 chacun par un ressort dit de latéral 9, 10.

Une biellette de rattrapage d'usure 11 s'étend le long du cylindre de roue 5 en ayant une première extrémité en appui sur l'âme 3a du premier segment 3 et une seconde extrémité en appui sur l'âme 4a du second segment 4 lorsque le frein est au repos.

Le cylindre de roue 5, qui est un actionneur hydraulique, est destiné à être actionné lors d'une utilisation du frein à tambour 1 selon un premier mode de fonctionnement dit "simplex", qui assure un freinage progressif particulièrement adapté pour freiner le véhicule en service. Il comprend une chambre hydraulique cylindrique fermée à ses extrémités par deux pistons qui s'écartent l'un de l'autre lorsque la pression hydraulique augmente et pousse les extrémités associées des segments 3 et 4.

L'actionneur électromécanique 6 assure quant à lui le freinage de stationnement en écartant les extrémités associées des segments pour assurer un blocage rapide et puissant des roues du véhicules selon un mode de fonctionnement dit "duo-servo" ainsi que leur maintien dans l'état bloqué, notamment quand le cylindre de roue 5 est inactif. En outre, l'actionneur 6 assure le freinage de secours.

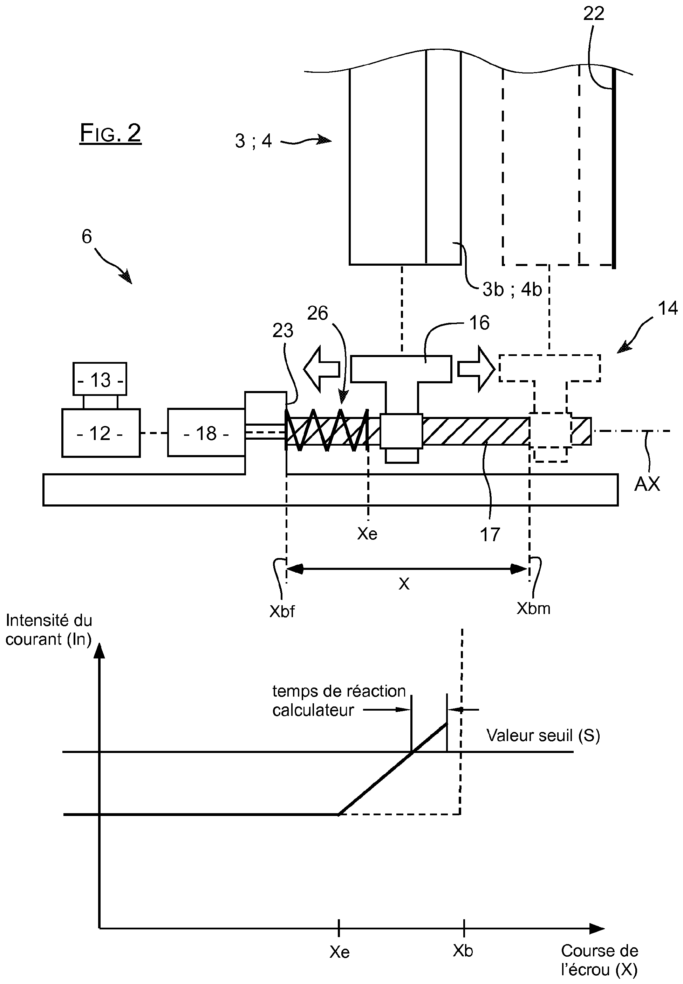

Comme visible sur la figure 2, l'actionneur électromécanique 6 comprend un moteur électrique 12, un calculateur 13, et un convertisseur de mouvement 14 du type vis-écrou. Le calculateur 13 pilote le courant électrique délivré au moteur 12 durant son activation. Placé aux bornes du moteur 12, ce calculateur 13 est apte à détecter des fluctuations d'intensité nominale In du courant électrique absorbé par le moteur, et interrompre la fourniture de ce courant pour arrêter le moteur.

Le convertisseur de mouvement 14 comporte un écrou 16 et une vis 17 entraînée en rotation par le moteur 12, de manière directe ou indirecte par l'intermédiaire d'un réducteur 18 assurant une démultiplication de la vitesse de rotation mesurée en sortie du moteur. La vis 17, d'axe AX de direction longitudinale, comprend un filetage mâle qui coopère avec un filetage femelle de l'écrou 16, cet écrou étant porté par la vis. En particulier, la vis 17 est fixe en translation tandis que l'écrou est bloqué en rotation et libre de se translater le long de la vis.

L'écrou 16 est prévu pour accompagner dans son déplacement un des segments 3 et 4 dans le frein 1 équipé d'un tel actionneur électromécanique 6, pour sélectivement l'appliquée contre la surface tournante de tambour repérée par 22, et l'écartée de cette surface tournante 22.

Plus précisément, la course de l'écrou 16 repérée par X, est bornée entre une portion fixe de l'actionneur 6 formant une butée fixe 23, marquant la position entièrement rétractée de l'écrou notée Xbf, et une butée dite mobile marquant la position de freinage, notée Xbm et illustrée en pointillée, c'est-à-dire pour laquelle la garniture de friction 3b ou 4b est en contact avec la surface tournante 22. La butée fixe 23 est située dans le prolongement de l'extrémité distale de la vis 17 par rapport à la surface tournante 22. La position de la butée mobile est quant à elle déterminée par l'épaisseur de la garniture de friction 3b qui s'use au fur et à mesure des cycles de freinage/défreinage, ceci ayant pour effet d'écarter progressivement cette butée mobile de la butée fixe 23, vers la surface tournante 22.

L'idée à la base de l'invention est d'équiper l'actionneur électromécanique 6 d'un moyen modifiant la résistance à l'avancement de l'écrou au niveau d'au moins une position prédéterminée, située à distance des butées, pour modifier l'intensité du courant traversant le moteur lors du passage de l'écrou sur cette position prédéterminée.

Selon ce mode de réalisation n'entrant pas dans le cadre de l'invention, l'actionneur électromécanique 6 comporte un ressort, par exemple, hélicoïdal 26 s'étendant sur une portion de la vis 17 depuis une première extrémité du ressort fixée à la butée fixe 23, jusqu'à une seconde extrémité s'étendant à distance de la butée fixe 23, comme visible sur la figure 2. Avec cette solution, quand l'écrou 16, en translation vers la butée fixe 23, arrive en appui contre la seconde extrémité du ressort, le ressort est enserré entre la butée fixe et l'écrou en exerçant une force d'opposition à l'avancement de cet écrou.

Avec cet arrangement, l'intensité In mesurée est globalement constante jusqu'à ce que l'écrou 16 contacte la seconde extrémité du ressort, ce niveau d'avancement de l'écrou étant repéré par Xe. L'écrou continuant son déplacement vers la butée fixe 23, il s'ensuit une augmentation de l'intensité In absorbée par le moteur 12 pour contrer la résistance à l'avancement de l'écrou.

Dans l'exemple de la figure 2, cette augmentation d'intensité suit une rampe, autrement dit une augmentation linéaire, mais il est entendu que l'invention n'est pas limitée à cette particularité, entendu que l'évolution de la courbe d'intensité est fonction de la nature du ressort, à savoir selon sa raideur et sa morphologie.

Il est compris ici que l'invention prévoit de fixer une valeur seuil d'intensité, notée S, pour lequel le calculateur 13 provoque l'arrêt de l'alimentation, en prenant en considération la nature du ressort et le temps de réaction du calculateur de manière à ce que l'arrêt effectif de l'écrou soit opéré avant que l'écrou ne soit complètement comprimé, autrement dit qu'il n'atteigne sa longueur à bloc. En effet, le ressort 26 entièrement comprimé agirait de la même manière que la butée fixe 23 et induirait un serrage de l'écrou contre celui-ci.

Etant donné que le pas de vis, la raideur du ressort 26 qui induit une évolution prédéterminée de l'intensité, et le temps de réaction du calculateur 13 sont des données connues pour une application donnée, la position de l'écrou à l'arrêt peut ainsi être déterminée vis-à-vis du nombre de tours effectués par la vis depuis la hausse d'intensité In du courant. Avec cet arrangement, l'actionneur 6 selon l'invention permet ainsi de connaître la position de l'écrou le long de la vis, tout en empêchant un serrage de l'écrou contre la butée fixe 23, lequel entraînerait un pic d'intensité, visible en trait pointillé sur la figure 2, et un endommagement.

Une variante dans laquelle le ressort 26 est fixé à l'écrou 16 au niveau de sa première extrémité et qui contacte la butée fixe 23 au niveau d'avancement Xe, ou encore une variante où le ressort est monté flottant sur la vis 17, peuvent être retenues sans sortir du cadre de l'invention. Avec un arrangement flottant, le ressort 26 est libre de se déplacer entre l'écrou 16 et la butée fixe 23 jusqu'à ce que l'écrou atteigne le niveau d'avancement Xe dans son déplacement vers la butée fixe, autrement dit quand l'écart mesuré entre la butée fixe et l'écrou correspond à la longueur du ressort, marquant le contact du ressort à la fois contre la butée fixe et aussi contre l'écrou.

Aussi, ce mode de réalisation, prévoit avantageusement de précontraindre le ressort 26 de manière à fournir une résistance à l'avancement de l'écrou plus importante. Un tel arrangement permet de tendre vers une augmentation plus rapide d'intensité du courant et par voie de conséquence favoriser un arrêt plus rapide de l'écrou, l'intensité atteignant la valeur seuil S pour un déplacement de l'écrou moindre en comparaison avec l'utilisation d'un ressort non précontraint.

Selon un mode de réalisation, la modification de la résistance à l'avancement de l'écrou est obtenue au moyen d'un filetage irrégulier de la vis.

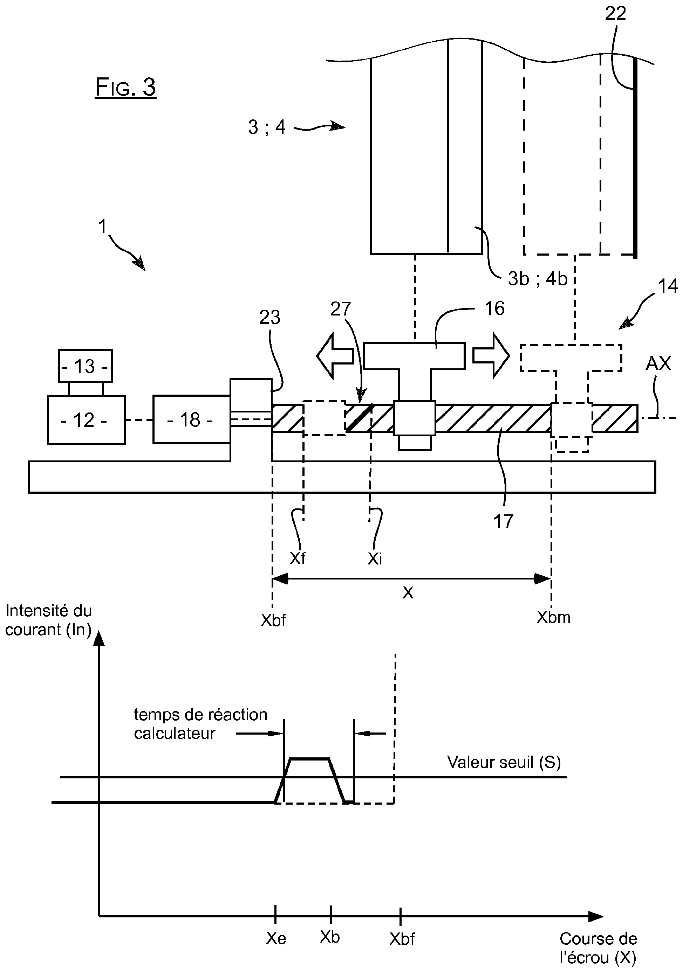

Dans l'exemple de la figure 3, reprenant la même architecture d'actionneur électromécanique que la figure 2 excepté le ressort 26, la vis 17 comprend un filet dont une portion repérée par 27 est surdimensionnée. Cette portion surdimensionnée 27, bornée entre deux extrémités situées à distance des butées mobile et fixe, augmente le frottement local entre la vis 17 et l'écrou 16 quand ce dernier évolue au niveau de celle-ci, et par voie de conséquence augmente la résistance à l'avancement de l'écrou. L'intensité nominale In évolue sous la forme d'un créneau lorsque l'écrou 16 traverse la portion surdimensionnée 27. Plus précisément, l'intensité In affiche successivement une augmentation sous la forme d'une rampe depuis un niveau d'avancement de l'écrou noté Xi, correspondant à son engagement dans la portion surdimensionnée 27. Cette augmentation est progressive dans la mesure où plus l'écrou s'avance le long de cette portion 27, plus les frottements sont importants, entendu que cet écrou l'engrène davantage. De manière non limitative, lorsque la longueur de la portion surdimensionnée 27 selon la direction longitudinale est supérieure à celle de l'écrou, il s'ensuit qu'à partir d'un avancement donné, l'écrou engrène intégralement cette portion. A ce stade, l'intensité nominale In suit une évolution constante jusqu'à ce que l'écrou débute son désengagement de la portion surdimensionnée 27, conduisant à une diminution sous la forme d'une rampe de l'intensité nominale In. Dès lors que l'écrou est totalement désengagé de cette portion de filet 27, au niveau d'un avancement noté Xf, l'intensité affiche une valeur constante, correspondant à la valeur mesurée avant le passage de l'écrou sur cette portion 27.

Dans ce mode de réalisation, il est compris que la valeur seuil S d'intensité pour lequel le calculateur 13 provoque l'arrêt de l'alimentation est défini de façon à avoir une valeur inférieure à celle mesurée quand l'écrou 16 évolue au niveau de la portion surdimensionnée 27, c'est-à-dire de manière à ce que le calculateur détecte un dépassement. A l'instar du premier mode de réalisation, la position de l'écrou 16 à l'arrêt, à distance des butées fixe et mobile, peut être déterminée vis-à-vis du nombre de tours effectués par la vis depuis la hausse d'intensité In du courant.

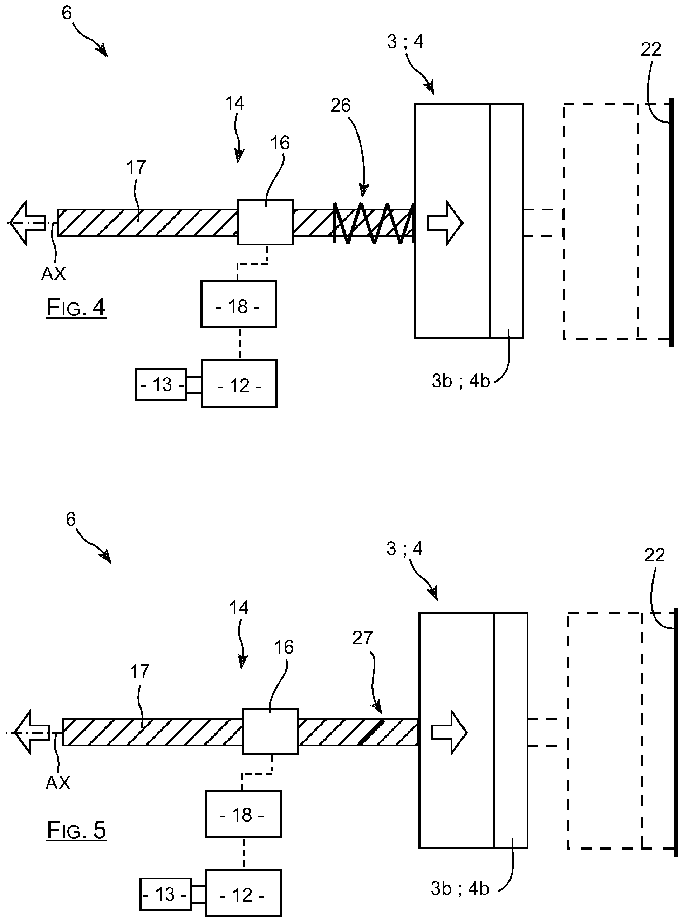

Dans l'exemple des figures 2 et 3, la vis 17 constitue un élément menant tandis que l'écrou 16 constitue un élément mené, avec un mouvement de rotation de la vis se transformant en mouvement de translation pour l'écrou, mais l'ajout d'un ressort 26 ou bien la formation d'une portion surdimensionnée 27 sur le filetage de la vis sont des solutions pouvant s'appliquer également pour un arrangement inverse. Autrement dit, ces solutions sont applicables dans le cas où c'est l'écrou 16 qui constitue l'élément menant tandis que la vis 17 constitue l'élément mené. Avec cet arrangement, illustré sur les figures 4 et 5, un mouvement de rotation de l'écrou 16, entraîné en rotation par le moteur électrique 12, se transforme en un mouvement de translation de la vis 17 pour déplacer directement le segment 3 prévu en extrémité de vis. Il est entendu qu'un arrangement dans lequel la vis 17 pousse indirectement le segment par l'intermédiaire d'une pièce interposée entre ce segment et l'extrémité de vis en regard du segment, ne sort pas du cadre de l'invention.

Ainsi, dans un mode de réalisation n'entrant pas dans le cadre de l'invention de l'actionneur électromécanique, visible sur la figure 4, qui reprend les mêmes composants que dans le cas du premier mode mais modulés différemment, le ressort 26 s'étend le long d'une portion de la vis 17 en étant fixé sur celle-ci au niveau de l'extrémité contre laquelle est maintenu le segment sous l'action des ressort de rappel 7 et 8. L'écrou 16 forme une butée fixe sur laquelle le ressort 26 prend appui quand la vis 17 s'éloigne de la surface tournante 22, c'est-à-dire dans le sens de rétractation du segment. A cet égard, il est compris que l'intensité nominale dans le cas de ce troisième mode évolue de la même manière que dans le cas du premier mode. L'intensité augmente à mesure que l'extrémité de vis portant fixement le ressort se rapproche de l'écrou une fois le ressort en appui contre cet écrou. augmentation d'intensité In, en réponse à l'augmentation de la résistance à l'avancement de la vis 17 sous l'effet du rappel élastique du ressort 26, est détectée par le calculateur 13 au-delà d'une valeur seuil S.

En variante de réalisation, n'entrant pas dans le cadre de l'invention, on prévoit de fixer le ressort 26 à l'écrou 16, au niveau de sa première extrémité, ou encore de le monté flottant sur la vis 17 entre l'écrou 16 et le segment 3 ou 4 qui est maintenu en appui contre la vis 17 sous l'effet des ressorts de rappel.

Enfin, selon un autre mode de réalisation, visible sur la figure 5, qui reprend les mêmes composants du mode de réalisation selon l'invention mais modulés différemment, la vis 17 comprend une portion de filet surdimensionnée 27 induisant de la même manière une augmentation de la résistance à l'avancement de la vis 17 lors de son passage dans l'écrou 16. Cette augmentation d'effort se répercute par une hausse d'intensité In correspondant à celle illustrée dans le cas du deuxième mode de réalisation.

L'invention a été décrite pour un emplacement particulier de la portion surdimensionnée 27, de manière à conduire à une modification d'intensité nominale (In) du courant traversant le moteur dans le sens de rétractation du segment 3 ou 4. Avec cet arrangement, la position de l'élément mené peut être déterminée et l'arrêt de l'alimentation peut également être ordonné avant que le segment n'atteigne sa position entièrement rétractée. Il s'ensuit que la durée de vie de l'actionneur est augmentée.

Il est entendu que l'invention n'est pas limitée à cette fin, l'emplacement de la portion surdimensionnée 27 pouvant varier en fonction du besoin. Autrement dit, la portion surdimensionnée être placés de manière à ce que la variation d'intensité résultant de leur sollicitation à l'encontre du déplacement de l'élément mené indique une autre position particulière que celle indiquant une proximité de la position entièrement rétractée.

A titre d'exemple, leur placement peut être défini de manière à ce que la variation d'intensité nominale In induite soit le marqueur que la garniture de friction 3b ou 4b du segment est quasiment entièrement consommée, invitant l'utilisateur du véhicule équipé d'un tel actionneur à changer le segment. Dans le cas d'une architecture selon mode de réalisation n'entrant pas dans le cadre de l'invention, un tel résultat est obtenu en plaçant le ressort le long de la vis 17 entre l'écrou 16 et le segment.

En particulier, l'actionneur électromécanique peut notamment comprendre une pluralité de ressorts ou présenter un filetage de la vis irrégulier à différents endroits, de manière à signifier plusieurs positions particulières.

Dans le cadre des modes de réalisations n'entrant pas dans le cadre de l'invention, la résistance à l'avancement de l'élément mené est assurée par le rappel élastique d'un ressort hélicoïdal. Cependant, toute autre forme de ressort ou tout autre organe assurant un rappel élastique en compression sont également envisageables dès lors qu'il est fixé ou borné dans son déplacement de manière à exercer une force d'opposition à l'avancement de l'élément mené au niveau d'une position prédéterminée. A titre d'exemple, le ressort hélicoïdal 26 pourrait être remplacé par une lamelle dont une extrémité est fixée à une portion fixe de l'actionneur 6 et une extrémité est située sur la course de l'élément mené pour former résistance à l'avancement par déformation élastique. Aussi, l'utilisation de rondelles élastiques, aussi appelées rondelles Belleville, montées en cascade pour former un ressort avec une raideur importante, est un substitut efficace à l'utilisation d'un ressort classique précontraint.

Dans le cadre des modes de réalisation, l'invention a été expliquée par la formation d'une portion surdimensionnée 27, autrement dit formée avec une surépaisseur, cependant il est entendu que la portion peut être formée d'un dépôt de couche mince d'un matériau sur le filet ou peut se limiter à une protubérance ponctuelle dépassant de la vis 17. Aussi, l'invention pourrait à l'inverse prévoir une portion de filet sous-dimensionnée ou formant un évidement de manière à provoquer une chute d'intensité In. Il est compris que dans cette variante de réalisation, la valeur seuil S est définie comme une valeur plancher en deçà de laquelle le calculateur 13 est invité à provoquer l'arrêt de l'alimentation. Concrètement, l'actionneur électromécanique selon le deuxième mode ou la quatrième mode de réalisation présente une singularité au niveau du filetage de la vis pour induire une variation de l'intensité nominale In du courant absorbé par le moteur électrique 12.

D'une manière générale, l'actionneur électromécanique 6 selon l'invention comporte au moins un moyen permettant de faire varier, i.e. d'accroître ou diminuer, la résistance à l'avancement au niveau d'une position prédéterminée d'un élément mené par rapport à un élément menant convertissant un mouvement de rotation en un mouvement de translation avantageusement choisi parmi un écrou et une vis engrenés ensemble. Cette variation de résistance à l'avancement induit un évènement sur la courbe d'intensité nominale In, mesurable par le biais d'un calculateur ou tout autre dispositif similaire, et permet ainsi d'évaluer la position de l'élément mené.

L'actionneur électromécanique 6 a été expliqué pour le cas où il équipe un frein à tambour comportant des segments, mais une application pour frein à disque, avec l'élément menant assurant le déplacement d'une plaquette par rapport à un disque de freinage, peut être retenue sans sortir du cadre de l'invention. D'une manière générale, l'actionneur électromécanique 6 selon l'invention permet de déplacer sélectivement un patin, désignant un segment ou une plaquette, contre une surface tournante à freiner.

**NOMENCLATURE**

| | | | |
|---|---|---|---|
| 1 | frein à tambour | 14 | convertisseur de mouvement |
| 2 | plateau | 16 | écrou |
| 3, 4 | segment de frein | 17 | vis |
| 3a , | 4a âme | 18 | réducteur |
| 3b, | 4b garniture de friction | 22 | surface tournante de tambour |
| 5 | cylindre de roue | 23 | butée fixe |
| 6 | actionneur électromécanique | 26 | ressort |
| 7, 8 | ressort de rappel | 27 | portion de filet surdimensionnée |
| 9, | 10 ressort de latéral | AX | axe de la vis suivant une direction longitudinale |
| 11 | biellette de rattrapage d'usure | S | seuil d'intensité |
| 12 | moteur électrique | X | course de l'écrou |
| 13 | calculateur | Xbf, Xbm, Xe, Xi, Xf | positions particulières de l'écrou |

## Revendications

1. Actionneur électromécanique (6) pour frein de véhicule automobile comprenant un moteur électrique (12) absorbant un courant d'intensité nominale (In), et un convertisseur de mouvement (14) de type vis-écrou incluant :
- un élément menant parmi une vis (17) d'axe (AX) s'étendant suivant une direction longitudinale et un écrou (16) porté par la vis (17), la vis et l'écrou comprenant chacun un filetage pour coopérer ensemble, et
- un élément mené correspondant à l'autre parmi la vis (17) et l'écrou (16), l'élément menant étant couplé en rotation avec le moteur électrique (12) et fixe en translation suivant la direction longitudinale, et l'élément mené étant fixe en rotation et libre en translation suivant la direction longitudinale, cet élément mené se déplaçant suivant la direction longitudinale en réponse à une rotation de l'élément menant,
**caractérisé en ce qu'**au moins une singularité (27) est formée sur la vis (17), au niveau d'une position prédéterminée le long du déplacement de l'élément mené suivant la direction longitudinale, cette singularité formant un moyen de variation de résistance à l'avancement de l'élément mené pour provoquer une modification d'intensité nominale (In) du courant traversant le moteur lors du passage de l'élément mené sur ladite position prédéterminée.

2. Actionneur électromécanique selon la revendication 1, dans lequel la modification d'intensité nominale (In) du courant traversant le moteur est une augmentation d'intensité.

3. Actionneur électromécanique selon la revendication 1, dans lequel la singularité (27) est une portion de filetage de la vis qui est surdimensionnée.

4. Frein pour véhicule automobile comprenant au moins un segment de frein (3 ; 4) et un actionneur électromécanique (6) selon l'une des revendications précédentes, l'élément mené de l'actionneur électromécanique étant prévu pour accompagner dans son déplacement le segment (3 ; 4) entre une position de freinage dans laquelle le segment est en appui contre une surface tournante (22) à freiner, et une position entièrement rétractée du segment.

5. Frein selon la revendication 4, dans lequel l'élément mené rencontre la position prédéterminée avant d'atteindre sa position entièrement rétractée dans le sens de rétractation du segment.

6. Frein selon l'une des revendications 4 et 5, dans lequel l'actionneur électromécanique (6) assure un freinage de stationnement et/ou de secours.

7. Frein selon la revendication 6, comprenant en outre un actionneur hydraulique (5) qui coopère avec ledit au moins un segment de frein (3 ; 4) pour assurer un freinage de service.

8. Procédé de suivi de la position de l'élément mené de l'actionneur électromécanique selon l'une des revendications 1 à 3, ce procédé comprenant les étapes de :
- établir une valeur seuil d'intensité (S) au regard de la variation d'intensité nominale (In) induite au passage de l'élément mené au niveau de la position prédéterminée,
- prendre des mesures d'intensité nominale (In) durant le déplacement de l'élément mené suivant la direction longitudinale et comparer ces mesures à la valeur seuil d'intensité (S).

9. Procédé selon la revendication 8, comprenant également les étapes de :
- arrêt de fourniture du courant au moteur électrique (12) si l'intensité nominale (In) qu'il absorbe atteint la valeur seuil (S), et
- évaluation de la position de l'élément mené à l'arrêt en considérant la rotation de l'élément menant entre l'instant où l'intensité nominale (In) atteint le seuil d'intensité et l'instant où l'arrêt du moteur est effectif.

## Patentansprüche

1. Elektromechanisches Stellglied (6) für Kraftfahrzeugbremsen, umfassend einen Elektromotor (12), der einen Nennstrom (In) aufnimmt, und einen Bewegungswandler (14) vom Typ Schraube-Mutter, der Folgendes enthält:
- ein antreibendes Element zwischen einer Schraube (17) einer Achse (AX), die sich in einer Längsrichtung erstreckt, und einer Mutter (16), die von der Schraube (17) getragen wird, wobei die Schraube und die Mutter jeweils ein Gewinde umfassen, um zusammenzuwirken, und
- ein angetriebenes Element, das dem anderen unter der Schraube (17) und der Mutter (16) entspricht, wobei das antreibende Element mit dem Elektromotor (12) in Drehung gekoppelt und in der Längsrichtung translatorisch fixiert ist, und das angetriebene Element in der Längsrichtung drehfest und translatorisch frei ist, wobei sich das angetriebene Element in der Längsrichtung als Reaktion auf eine Rotation des antreibenden Elements bewegt,
**dadurch gekennzeichnet, dass** auf der Schraube (17) an einer vorbestimmten Position entlang der Bewegung des angetriebenen Elements in der Längsrichtung mindestens eine Singularität (27) ausgebildet ist, wobei diese Singularität ein Mittel zur Änderung des Widerstands gegen den Vorschub des angetriebenen Elements bildet, um eine Änderung des Nennstroms (In) des durch den Motor fließenden Stroms beim Passieren des angetriebenen Elements an der vorbestimmten Position zu bewirken.

2. Elektromechanisches Stellglied nach Anspruch 1, wobei die Änderung des Nennstroms (In) des durch den Motor fließenden Stroms eine Stromstärkenerhöhung ist.

3. Elektromechanisches Stellglied nach Anspruch 1, wobei die Singularität (27) ein überdimensionierter Gewindeabschnitt der Schraube ist.

4. Bremse für Kraftfahrzeuge, umfassend mindestens eine Bremsbacke (3; 4) und ein elektromechanisches Stellglied (6) nach einem der vorhergehenden Ansprüche, wobei das angetriebene Element des elektromechanischen Stellglieds vorgesehen ist, um die Backe (3; 4) in ihrer Bewegung zwischen einer Bremsposition, in der die Backe an einer zu bremsenden Drehfläche (22) anliegt, und einer vollständig zurückgezogenen Position der Backe zu begleiten.

5. Bremse nach Anspruch 4, wobei das angetriebene Element auf die vorbestimmte Position trifft, bevor es seine vollständig zurückgezogene Position in der Rückzugsrichtung der Backe erreicht.

6. Bremse nach einem der Ansprüche 4 und 5, wobei das elektromechanische Stellglied (6) eine Feststell- und/oder Notbremsung gewährleistet.

7. Bremse nach Anspruch 6, ferner umfassend ein hydraulisches Stellglied (5), das mit der mindestens einen Bremsbacke (3; 4) zusammenwirkt, um eine Betriebsbremsung zu gewährleisten.

8. Verfahren zur Verfolgung der Position des angetriebenen Elements des elektromechanischen Stellglieds nach einem der Ansprüche 1 bis 3, wobei dieses Verfahren die folgenden Schritte umfasst:
- Festlegen eines Stromstärkenschwellenwerts (S) in Bezug auf die Änderung des Nennstroms (In), die beim Passieren des angetriebenen Elements an der vorbestimmten Position induziert wird,
- Vornehmen von Messungen des Nennstroms (In) während der Bewegung des angetriebenen Elements in der Längsrichtung und Vergleichen dieser Messungen mit dem Stromstärkenschwellenwert (S).

9. Verfahren nach Anspruch 8, ferner umfassend die folgenden Schritte:
- Unterbrechen der Stromversorgung des Elektromotors (12), wenn der von ihm aufgenommene Nennstrom (In) den Schwellenwert (S) erreicht, und
- Bewerten der Position des zum Stillstand gebrachten angetriebenen Elements unter Berücksichtigung der Drehung des antreibenden Elements zwischen dem Zeitpunkt, an dem der Nennstrom (In) den Stromstärkenschwellenwert erreicht, und dem Zeitpunkt, an dem der Motor tatsächlich zum Stillstand kommt.

## Claims

1. An electromechanical actuator (6) for an automobile vehicle brake comprising an electric motor (12) drawing a current of rated intensity (In), and a screw-nut type motion converter (14) including:
- a driving element among a screw (17) with an axis (AX) extending along a longitudinal direction and a nut (16) carried by the screw (17), the screw and the nut each comprising a thread for cooperating together, and
- a driven element corresponding to the other among the screw (17) and the nut (16), the driving element being rotationally coupled to the electric motor (12) and translationally fixed along the longitudinal direction, and the driven element being rotationally fixed and translationally free along the longitudinal direction, this driven element moving in the longitudinal direction in response to a rotation of the driving element,
**characterised in that** at least one singularity (27) is formed on the screw (17), at a predetermined position along the movement of the driven element along the longitudinal direction, said singularity forming a means for varying the resistance to progress of the driven element to cause a change in the rated intensity (In) of the current flowing through the motor upon when the driven element passes through said predetermined position.

2. The electromechanical actuator according to claim 1, wherein the change in rated intensity (In) of the current passing through the motor is an intensity increase.

3. The electromechanical actuator according to claim 1, wherein the singularity (27) is a thread portion of the screw that is oversized.

4. An automobile vehicle brake comprising at least one brake shoe (3; 4) and an electromechanical actuator (6) according to any of the preceding claims, the driven element of the electromechanical actuator being provided to accompany the shoe (3; 4) in its movement between a braking position in which the shoe is bearing against a rotating surface (22) to be braked, and a fully retracted position of the shoe.

5. The brake according to claim 4, wherein the driven element encounters the predetermined position before reaching its fully retracted position in the retraction direction of the shoe.

6. The brake according to any one of claims 4 and 5, wherein the electromechanical actuator (6) provides parking and/or emergency braking.

7. The brake according to claim 6, further comprising a hydraulic actuator (5) which cooperates with said at least one brake shoe (3; 4) to provide service braking.

8. A method for monitoring the position of the driven element of the electromechanical actuator according to any of claims 1 to 3, the method comprising the steps of:
- establishing an intensity threshold value (S) with respect to the variation in the rated intensity (In) induced when the driven element passes through the predetermined position,
- taking measurements of the rated intensity (In) during the movement of the driven element along the longitudinal direction and comparing these measurements with the intensity threshold value (S).

9. The method according to claim 8, further comprising the steps of:
- stopping providing current to the electric motor (12) if the rated intensity (In) it draws reaches the threshold value (S), and
- evaluating the position of the driven element being stopped by considering the rotation of the driving element between the time instant when the rated intensity (In) reaches the intensity threshold and the time instant when the motor stop is actual.
